(19) Europäisches Patentamt
European Patent Office
Office européen des brevets

(11) Publication number: 0 210 813
B1

(12) **EUROPEAN PATENT SPECIFICATION**

(45) Date of publication of patent specification: **04.07.90**

(51) Int. Cl.[5]: **C 04 B 35/46**, C 04 B 35/18

(21) Application number: **86305583.6**

(22) Date of filing: **21.07.86**

(54) **Aluminum titanate.-mullite base ceramics.**

(30) Priority: **22.07.85 JP 161712/85**

(43) Date of publication of application:
**04.02.87 Bulletin 87/06**

(45) Publication of the grant of the patent:
**04.07.90 Bulletin 90/27**

(84) Designated Contracting States:
**BE DE FR GB SE**

(56) References cited:
**EP-A-0 036 052**
**EP-A-0 037 236**
**EP-A-0 037 868**
**EP-A-0 133 021**

(73) Proprietor: **NGK INSULATORS, LTD.**
**2-56, Suda-cho, Mizuho-ku**
**Nagoya-shi, Aichi 467 (JP)**

(72) Inventor: **Asami, Seiichi**
**1-110, Aza-Kamitokosafu Motojyuku-Cho**
**Okazaki City Aichi Pref. (JP)**
Inventor: **Harada, Takashi**
**9, Takeda-Cho, 3-Chome Mizuho-Ku**
**Nagoya City Aichi Pref. (JP)**
Inventor: **Hamanaka, Toshiyuki**
**429-50, Minamiwakamatsu-Cho**
**Suzuka City Mie Pref. (JP)**

(74) Representative: **Paget, Hugh Charles Edward et al**
**MEWBURN ELLIS & CO. 2/3 Cursitor Street**
**London EC4A 1BQ (GB)**

EP 0 210 813 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a ceramics which is mainly composed, as crystalline phases, of aluminum titanate and mullite and has high heat resistance, excellent thermal shock resistance and thermal shock durability.

In industrial technology, to solve new problems occurring with technological development, demands for high performance than has been attained are made with respect to the materials to be used in industry.

As to ceramic materials which have excellent corrosion resistance, materials further possessing high heat resistance and thermal shock resistance are sought. The thermal shock resistance of ceramics is influenced not only by characteristics such as the coefficient of thermal expansion, thermal conductivity, strength, modulus of elasticity, Poisson ratio, etc. of the material but also by the size and the profile of a product made therefrom as well as heating and cooling states, that is, heat transfer speed. Among these characteristics influencing the thermal shock resistance, particularly the coefficient of thermal expansion has a large contributory factor. Particularly, when the heat transfer speed is large, it is known that thermal shock resistance is greatly influenced by the coefficient of thermal expansion only. Thus, the development of materials having excellent thermal shock resistance as well as a low coefficient of thermal expansion has been much demanded. At the same time, it has been desired that the heat resistance of the material be also high.

On the other hand, the coefficient of thermal expansion of aluminum titanate crystals, which constitute the aluminum titanate ceramics, varies largely depending upon the crystal axes. When the thermal stress exceeds the limit of strength of the constituting crystals or grain boundaries, microcracks are formed inside the grains or the grain boundaries. Consequently, the strength of ceramics is reduced and it is likely to crack or break when used as a product. Therefore, development of materials having high strength and low coefficient of thermal expansion has been sought.

As the materials satisfying this object, there has been developed low expansion type ceramics mainly composed, as a crystalline phase, of magnesium oxide-aluminum oxide-titanium oxide-iron oxide-silicon oxide (see US—A—4,316,965 and EP—A—37,868).

Subsequently, there has been developed a material which contains aluminum titanate and mullite as a main crystalline phase and uses iron oxide and/or rare earth metal oxides as a sintering additive in such an amount as not to diminish the low coefficient of thermal expansion of aluminum titanate EP—A—133,021 and US—A—4,483,944).

Although the above-mentioned materials are excellent ceramic materials which possess high refractoriness and high thermal shock resistance as well as high mechanical strength and achieve considerable stability of the crystals of aluminum titanate under continuously high temperature conditions, when a honeycomb structural type catalyst converter having a number of fine through holes as disclosed in the above publications is produced and used, its dimension gradually increases due to thermal cycling from the original value and the original dimension is not restored. Further, such a converter is sooner or later broken owing to dimensional growth. That is, the above materials have a problem that they are slightly poor in durability when they undergo thermal cycling.

Nevertheless, the conventional improvement of the aluminum titanate-mullite base material gives priority on the stability of the crystal of aluminum titanate under the continuously high temperature condition. Therefore, there still remains a problem that it is extremely difficult to obtain a material which has refractoriness, heat resistance and thermal shock resistance as well as high mechanical strength and further durability against the above-mentioned thermal cycling.

It is an object of the present invention to provide a ceramics which solves the above problem. Particularly, paying attention to the mullite base glass phase, the invention is aimed at making the amount of glass phase in mullite base matrices as small as possible or completely removing it.

According to a first aspect of the present invention, there is provided a sintered aluminum titanate-mullite base ceramics having a chemical composition of not more than 0.8% of MgO, from 53 to 74% of $Al_2O_3$, from 14 to 33% of $TiO_2$, from 1.2 to 5% of $Fe_2O_3$, from 6 to 20% of $SiO_2$, and not more than 0.3% of $(CaO+Na_2O+K_2O)$, the amount of glass in mullite base matrices of the sintered ceramics being not more than 5% when measured at a cross section of the sintered body, said aluminum titanate-mullite base ceramics being obtained by compounding from 40 to 65% of a raw material of aluminum titanate essentially consisting of from 45 to 62% of $Al_2O_3$, from 34 to 50% of $TiO_2$, from 3 to 7% of $Fe_2O_3$, not more than 1% of $SiO_2$ and not more than 0.3% of $(CaO+Na_2O+K_2O)$ with from 35 to 60% of a raw material of mullite essentially consisting of from 18 to 32% of $SiO_2$, from 68 to 82% of $Al_2O_3$ and not more than 0.8% of $(Fe_2O_3+TiO_2+CaO+MgO+Na_2O+K_2O)$, at least one of said aluminum titanate starting material and said mullite starting material being fired, molding the resulting mixture, and firing the thus obtained molding at from 1,550 to 1,700°C in an oxidizing atmosphere.

According to a second aspect of the present invention, there is provided a sintered aluminum titanate-mullite base ceramics having a chemical composition of not more than 0.8% of MgO, from 53 to 74% of $Al_2O_3$, from 14 to 33% of $TiO_2$, from 1.2 to 5% of $Fe_2O_3$, from 6 to 20% of $SiO_2$, and not more than 0.3% of $(CaO+Na_2O+K_2O)$, the amount of glass in mullite base matrices of the sintered body being not more than 5% when measured at a cross section of the sintered body, said aluminum titanate-mullite base ceramics being obtained by compounding from 40 to 65% of a starting material of aluminum titanate essentially consisting of not more than 1% of MgO, from 45 to 62% of $Al_2O_3$, from 34 to 50% of $TiO_2$, from 3 to 7% of $Fe_2O_3$, not more than 1% of $SiO_2$ and not more than 0.3% of ($CaO+Na_2O+K_2O$) with from 35 to 60% of a starting material of mullite essentially consisting of from 18 to 32% of $SiO_2$, from 68 to 82% of $Al_2O_3$ and not more than 0.8% of ($Fe_2O_3+TiO_2+CaO+MgO+Na_2O+K_2O$), at least one of said aluminum titanate starting material and said mullite starting material being fired, molding the resulting mixture, and firing the thus obtained molding at from 1,550 to 1,700°C in an oxidizing atmosphere.

Preferably, the content of ($Na_2O+K_2O$) in the aluminum titanate starting material is not more than 0.15%.

Preferably, the content of ($Na_2O+K_2O$) in the mullite starting material is not more than 0.25%.

Preferably, the average coefficient of thermal expansion over the temperature range from 40 to 800°C is from $-2.0\times10^{-6}$/°C to $2.0\times10^{-6}$/°C.

Preferably, the increment in a linear dimension of the ceramics is not more than 1.0% after exposure forty times to a thermal cycle of a temperature increase from 40°C to 1,260°C in a time of 6 minutes and a cooling from 1,260°C to 40°C in a time of 5 minutes.

Preferably, the maximum difference between a value on the thermal expansion curve during temperature increase and that on the thermal expansion curve during cooling at the identical temperature is not more than 0.18%.

The ceramics may be shaped as a honeycomb structural body.

The aluminum titanate-mullite base ceramics according to the present invention has refractoriness, heat resistance, thermal shock resistance and high mechanical strength as well as thermal shock durability.

Embodiments of the present invention will be given by way of non-limitative example in the following description of the invention taken in connection with the attached drawings.

In the attached drawings:

Fig. 1 is a diagram showing heat curves in a thermal cycling test;

Fig. 2 is a 1,300 magnification SEM (*s*canning *e*lectron *m*icroscope) photograph showing microstructure of crystals of a fired product of a conventional material;

Fig. 3 is a 1,300 magnification SEM photograph of showing the microstructure of crystals of the above conventional material having undergone 250 thermal cycles between 1,260°C and 40°C;

Fig. 4 is a 1,300 magnification SEM photograph showing the microstructure of a material of Example 3 according to the present invention as sintered; and

Fig. 5 is a 1,300 magnification SEM photograph showing the microstructure of crystals of the material in Example 3 according to the present invention which has undergone 250 thermal cycles between 1,260 and 40°C.

Throughout the specification and claims of this application, "%" in the chemical composition means "%" by weight.

The amount of the glass in the mullite base matrices of the sintered body, being not more than 5%, is determined as follows:

In a photograph of a scanning electron microscope (SEM), with respect to a polished cross section of the sintered body, the area of mullite base matrices and the area of the glass phase are measured by using a planimeter, excluding the area of the pores and that of the aluminum titanate. The glass amount is represented by the following expression:

$$\text{Glass amount (\% at area)} = \frac{\text{area of glass phase (\%)}}{\text{area of mullite base matrices (\%)}} \times 100$$

According to an example of conventional materials, polygonal portions surrounded by the mullite crystals are present in the mullite base matrices. The analysis of chemical components in these portions revealed that they substantially have a composition of 68% of $SiO_2$, 24% of $Al_2O_3$, 4.4% of $TiO_2$, 1.0% of CaO and 2.0% of KNaO. This composition corresponds to a composition constituting the glass phase. In this application, these portions are called a "glass phase" in the mullite base matrices.

Examples of the invention and Comparative Examples are given in Tables 1 and 2. In these Tables, asterisk-prefixed numbers denote Comparative Examples, while AT and MU denote the aluminum titanate starting material and the mullite starting material, respectively.

Table 1(a)

| Sample No. | Chemical composition (wt%) | | | | | | | | | Firing temperature of starting material (°C) | | Mixing ratio AT/MU (wt%) |
|---|---|---|---|---|---|---|---|---|---|---|---|---|
| | AT | | | | | | MU | | | | | |
| | MgO | $Al_2O_3$ | $TiO_2$ | $Fe_2O_3$ | $SiO_2$ | $CaO+Na_2O+K_2O$ $(Na_2O+K_2O)$ | $SiO_2$ | $Al_2O_3$ | $Fe_2O_3+TiO_2+CaO+MgO+Na_2O+K_2O$ $(Na_2O+K_2O)$ | AT | MU | |
| * 1 | 0.5 | 50.7 | 43.6 | 4.8 | 0.2 | 0.16 (0.11) | 24.8 | 74.7 | 0.43 (0.21) | 1,600 | green | 35/65 |
| 2 | 0.5 | 50.7 | 43.6 | 4.8 | 0.2 | 0.16 (0.11) | 24.8 | 74.7 | 0.43 (0.21) | 1,600 | green | 40/60 |
| 3 | 0.5 | 50.7 | 43.6 | 4.8 | 0.2 | 0.16 (0.11) | 24.8 | 74.7 | 0.43 (0.21) | 1,600 | green | 50/50 |
| 4 | 0.5 | 50.7 | 43.6 | 4.8 | 0.2 | 0.16 (0.11) | 24.8 | 74.7 | 0.43 (0.21) | 1,600 | green | 65/35 |
| * 5 | 0.5 | 50.7 | 43.6 | 4.8 | 0.2 | 0.16 (0.11) | 24.8 | 74.7 | 0.43 (0.21) | 1,600 | green | 70/30 |
| 6 | 0.0 | 53.9 | 41.7 | 3.9 | 0.3 | 0.14 (0.09) | 24.8 | 74.7 | 0.43 (0.21) | 1,600 | 1,600 | 50/50 |
| * 7 | 0.0 | 53.8 | 41.7 | 3.9 | 0.3 | 0.25 (0.16) | 24.8 | 74.7 | 0.43 (0.21) | 1,600 | 1,600 | 50/50 |
| * 8 | 0.0 | 53.7 | 41.6 | 3.9 | 0.4 | 0.33 (0.20) | 24.8 | 74.7 | 0.43 (0.21) | 1,600 | 1,600 | 50/50 |
| 9 | 0.5 | 53.1 | 41.8 | 4.0 | 0.4 | 0.14 (0.10) | 24.8 | 74.7 | 0.43 (0.21) | 1,600 | 1,600 | 50/50 |
| * 10 | 0.5 | 53.0 | 41.8 | 4.0 | 0.4 | 0.26 (0.18) | 24.8 | 74.7 | 0.43 (0.21) | 1,600 | 1,600 | 50/50 |
| * 11 | 0.5 | 52.9 | 41.7 | 4.0 | 0.5 | 0.34 (0.23) | 24.8 | 74.7 | 0.43 (0.21) | 1,600 | 1,600 | 50/50 |
| 12 | 1.0 | 52.4 | 42.2 | 4.0 | 0.2 | 0.15 (0.10) | 24.8 | 74.7 | 0.43 (0.21) | 1,600 | 1,600 | 50/50 |
| * 13 | 1.5 | 51.6 | 42.4 | 4.0 | 0.3 | 0.15 (0.12) | 24.8 | 74.7 | 0.43 (0.21) | 1,550 | 1,600 | 50/50 |
| * 14 | 0.5 | 43.2 | 51.9 | 4.0 | 0.2 | 0.16 (0.11) | 24.8 | 74.7 | 0.43 (0.21) | 1,600 | green | 50/50 |
| 15 | 0.5 | 45.0 | 50.0 | 4.0 | 0.3 | 0.17 (0.12) | 24.8 | 74.7 | 0.43 (0.21) | 1,600 | green | 50/50 |
| 16 | 0.5 | 62.0 | 34.0 | 3.0 | 0.3 | 0.17 (0.12) | 24.8 | 74.7 | 0.43 (0.21) | 1,600 | green | 50/50 |
| * 17 | 0.5 | 63.5 | 32.4 | 3.0 | 0.3 | 0.17 (0.12) | 24.8 | 74.7 | 0.43 (0.21) | 1,600 | green | 50/50 |
| 18 | 0.5 | 52.0 | 39.9 | 7.0 | 0.3 | 0.23 (0.12) | 24.8 | 74.7 | 0.43 (0.21) | 1,600 | 1,600 | 50/50 |

Table 1(b)

| Sample No. | Chemical composition of AT-MU green body | | | | | | Firing temperature (°C) | Results in evaluation tests | | | |
|---|---|---|---|---|---|---|---|---|---|---|---|
| | MgO | $Al_2O_3$ | $TiO_2$ | $Fe_2O_3$ | $SiO_2$ | $CaO+Na_2O+K_2O$ | | Content of glass phase in matrices (%) | Coefficient of thermal expansion $\times 10^{-6}/°C$ (40-800°C) | Thermal cyclic test (%) | Thermal expansion hysteresis test (%) |
| * 1 | 0.2 | 66.3 | 15.4 | 1.7 | 16.2 | 0.20 | 1,600 | <1 | 2.18 | 0.46 | - |
| 2 | 0.2 | 65.1 | 17.5 | 2.0 | 15.0 | 0.19 | 1,600 | <1 | 1.90 | 0.49 | - |
| 3 | 0.3 | 62.8 | 21.8 | 2.4 | 12.5 | 0.19 | 1,600 | <1 | 0.36 | 0.53 | 0.14 |
| 4 | 0.3 | 59.1 | 28.4 | 3.2 | 8.8 | 0.18 | 1,600 | 3 | -0.05 | 0.92 | 0.18 |
| * 5 | 0.4 | 57.8 | 30.6 | 3.4 | 7.6 | 0.18 | 1,600 | 9 | -0.45 | 1.21 | 0.23 |
| 6 | 0.0 | 64.3 | 20.9 | 2.0 | 12.6 | 0.18 | 1,600 | <1 | 0.53 | 0.43 | 0.14 |
| * 7 | 0.0 | 64.2 | 20.9 | 2.0 | 12.6 | 0.24 | 1,600 | 6 | 0.50 | 1.08 | - |
| * 8 | 0.0 | 64.2 | 20.9 | 2.0 | 12.6 | 0.28 | 1,600 | 12 | 0.47 | 1.34 | 0.25 |
| 9 | 0.3 | 63.8 | 21.0 | 2.1 | 12.6 | 0.18 | 1,600 | <1 | 0.37 | 0.61 | 0.15 |
| * 10 | 0.3 | 63.7 | 21.0 | 2.1 | 12.6 | 0.24 | 1,600 | 10 | 0.45 | 1.27 | - |
| * 11 | 0.3 | 63.7 | 20.9 | 2.1 | 12.7 | 0.28 | 1,600 | 15 | 0.38 | 1.39 | 0.21 |
| 12 | 0.5 | 63.5 | 21.2 | 2.0 | 12.6 | 0.18 | 1,600 | 5 | 0.44 | 0.93 | - |
| * 13 | 0.8 | 63.1 | 21.3 | 2.0 | 12.6 | 0.18 | 1,550 | 18 | 0.78 | 1.52 | 0.25 |
| * 14 | 0.3 | 59.0 | 26.0 | 2.0 | 12.5 | 0.19 | 1,600 | 13 | 0.87 | 1.43 | - |
| 15 | 0.3 | 59.8 | 25.1 | 2.0 | 12.6 | 0.19 | 1,600 | 4 | 0.31 | 0.89 | - |
| 16 | 0.3 | 68.3 | 17.1 | 1.5 | 12.6 | 0.19 | 1,600 | <1 | 1.97 | 0.41 | - |
| * 17 | 0.3 | 69.1 | 16.3 | 1.5 | 12.6 | 0.19 | 1,600 | <1 | 2.15 | 0.83 | - |
| 18 | 0.3 | 63.3 | 20.0 | 3.5 | 12.6 | 0.22 | 1,600 | 3 | 0.88 | 0.91 | - |

Table 1(c)

| Sample No. | Chemical composition (wt%) AT MgO | AT $Al_2O_3$ | AT $TiO_2$ | AT $Fe_2O_3$ | AT $SiO_2$ | AT $CaO+Na_2O+K_2O$ $(Na_2O+K_2O)$ | MU $SiO_2$ | MU $Al_2O_3$ | MU $Fe_2O_3+TiO_2+CaO+MgO+Na_2O+K_2O$ $(Na_2O+K_2O)$ | Firing temperature of starting material (°C) AT | Firing temperature of starting material (°C) MU | Mixing ratio AT/MU (wt%) |
|---|---|---|---|---|---|---|---|---|---|---|---|---|
| * 19 | 0.5 | 51.5 | 39.4 | 8.0 | 0.3 | 0.22 (0.12) | 24.8 | 74.7 | 0.43 (0.21) | 1,600 | 1,600 | 50/50 |
| 20 | 0.5 | 53.1 | 41.1 | 4.0 | 1.0 | 0.23 (0.12) | 24.8 | 74.7 | 0.43 (0.21) | 1,600 | 1,600 | 50/50 |
| * 21 | 0.5 | 52.9 | 40.8 | 4.0 | 1.5 | 0.23 (0.13) | 24.8 | 74.7 | 0.43 (0.21) | 1,600 | 1,600 | 50/50 |
| 22 | 0.5 | 50.7 | 43.6 | 4.8 | 0.2 | 0.16 (0.11) | 24.8 | 74.7 | 0.43 (0.21) | green | 1,600 | 50/50 |
| * 35 | 0.5 | 50.7 | 43.6 | 4.8 | 0.2 | 0.16 (0.11) | 24.8 | 74.7 | 0.43 (0.21) | green | green | 50/50 |
| * 23 | 0.5 | 50.7 | 43.6 | 4.8 | 0.2 | 0.16 (0.11) | 14.8 | 84.6 | 0.52 (0.20) | 1,600 | 1,600 | 50/50 |
| 24 | 0.5 | 50.7 | 43.6 | 4.8 | 0.2 | 0.16 (0.11) | 18.0 | 81.6 | 0.40 (0.18) | 1,600 | 1,600 | 50/50 |
| 25 | 0.5 | 50.7 | 43.6 | 4.8 | 0.2 | 0.16 (0.11) | 31.5 | 68.0 | 0.45 (0.20) | 1,600 | 1,600 | 50/50 |
| * 26 | 0.5 | 50.7 | 43.6 | 4.8 | 0.2 | 0.16 (0.11) | 34.7 | 64.7 | 0.58 (0.21) | 1,600 | 1,600 | 50/50 |
| * 27 | 0.5 | 50.7 | 43.6 | 4.8 | 0.2 | 0.16 (0.11) | 24.9 | 74.3 | 0.78 (0.29) | 1,600 | 1,600 | 50/50 |
| * 28 | 0.5 | 50.7 | 43.6 | 4.8 | 0.2 | 0.16 (0.11) | 24.9 | 74.1 | 0.92 (0.34) | 1,600 | 1,600 | 50/50 |
| 36 | 1.0 | 52.3 | 42.2 | 4.0 | 0.3 | 0.15 (0.12) | 24.7 | 74.5 | 0.76 (0.24) | 1,600 | green | 65/35 |
| 37 | 0.5 | 61.0 | 35.0 | 3.0 | 0.3 | 0.17 (0.11) | 17.9 | 81.7 | 0.40 (0.18) | 1,600 | green | 40/60 |
| 38 | 0.5 | 45.0 | 50.0 | 4.0 | 0.3 | 0.17 (0.12) | 31.8 | 67.7 | 0.45 (0.20) | 1,600 | green | 65/35 |
| 39 | 0.5 | 52.0 | 39.9 | 7.0 | 0.3 | 0.23 (0.14) | 24.7 | 74.5 | 0.76 (0.23) | 1,600 | green | 65/35 |
| 40 | 0.5 | 53.1 | 41.1 | 4.0 | 1.0 | 0.23 (0.13) | 31.8 | 67.7 | 0.45 (0.20) | 1,600 | green | 40/60 |
| 41 | 0.5 | 50.7 | 43.6 | 4.8 | 0.2 | 0.16 (0.11) | 17.9 | 81.7 | 0.40 (0.18) | 1,600 | green | 65/35 |
| 42 | 0.5 | 50.6 | 43.6 | 4.8 | 0.2 | 0.28 (0.14) | 24.7 | 74.5 | 0.76 (0.24) | 1,600 | green | 50/50 |

Table 1(d)

| Sample No. | Chemical composition of AT-MU green body | | | | | | Firing temperature (°C) | Results in evaluation tests | | | |
|---|---|---|---|---|---|---|---|---|---|---|---|
| | MgO | $Al_2O_3$ | $TiO_2$ | $Fe_2O_3$ | $SiO_2$ | $CaO+Na_2O+K_2O$ | | Content of glass phase in matrices (%) | Coefficient of thermal expansion $\times10^{-6}/°C$ (40-800°C) | Thermal cyclic test (%) | Thermal expansion hysteresis test (%) |
| * 19 | 0.3 | 63.1 | 19.8 | 4.0 | 12.6 | 0.21 | 1,600 | 8 | 1.09 | 1.18 | - |
| 20 | 0.3 | 63.9 | 20.6 | 2.0 | 12.9 | 0.22 | 1,600 | 4 | 0.29 | 0.94 | - |
| * 21 | 0.3 | 63.8 | 20.5 | 2.0 | 13.2 | 0.22 | 1,600 | 15 | -0.22 | 1.48 | - |
| 22 | 0.3 | 62.7 | 21.9 | 2.4 | 12.5 | 0.19 | 1,600 | <1 | 0.78 | 0.81 | - |
| * 35 | 0.3 | 62.7 | 21.9 | 2.4 | 12.5 | 0.19 | 1,600 | 29 | 0.34 | 1.92 | - |
| * 23 | 0.3 | 67.6 | 21.9 | 2.5 | 7.5 | 0.19 | 1,600 | <1 | 2.30 | 1.1 | - |
| 24 | 0.3 | 66.1 | 21.9 | 2.4 | 9.1 | 0.17 | 1,600 | <1 | 1.48 | 0.87 | - |
| 25 | 0.3 | 59.3 | 21.9 | 2.4 | 15.9 | 0.18 | 1,600 | 2 | 0.41 | 0.83 | - |
| * 26 | 0.3 | 57.7 | 21.9 | 2.5 | 17.4 | 0.19 | 1,600 | 12 | -0.07 | 1.38 | - |
| * 27 | 0.3 | 62.5 | 21.9 | 2.5 | 12.6 | 0.22 | 1,600 | 10 | 0.53 | 1.23 | - |
| * 28 | 0.3 | 62.3 | 22.0 | 2.5 | 12.6 | 0.26 | 1,600 | 22 | 0.47 | 1.63 | - |
| 36 | 0.8 | 60.1 | 27.4 | 2.6 | 8.8 | 0.20 | 1,600 | 5 | 0.26 | 0.94 | - |
| 37 | 0.2 | 73.4 | 14.0 | 1.2 | 10.9 | 0.20 | 1,600 | <1 | 1.98 | 0.38 | - |
| 38 | 0.3 | 53.0 | 32.5 | 2.6 | 11.3 | 0.22 | 1,600 | 4 | 0.76 | 0.88 | - |
| 39 | 0.3 | 59.9 | 25.9 | 4.8 | 8.8 | 0.23 | 1,600 | 4 | 1.41 | 0.97 | - |
| 40 | 0.2 | 61.9 | 16.4 | 1.7 | 19.5 | 0.24 | 1,600 | 5 | -0.03 | 0.95 | - |
| 41 | 0.3 | 61.7 | 28.3 | 3.1 | 6.4 | 0.19 | 1,600 | <1 | 1.75 | 0.51 | - |
| 42 | 0.3 | 62.6 | 21.8 | 2.5 | 12.5 | 0.29 | 1,600 | 5 | 0.87 | 0.99 | - |

Table 2

Compositions of starting materials as in Example 3

| Sample No. | Firing temp. (°C) AT | MU | Green body | Results in evaluation: Content of glass phase in matrices (%) | Coefficient of thermal expansion × $10^{-6}$/°C (40-800°C) | Thermal cyclic test (%) | Coefficient of thermal expansion after aging 1100°C×500 hrs × $10^{-6}$ (/°C) |
|---|---|---|---|---|---|---|---|
| * 29 | 1,500 | 1,500 | 1,500 | <1 | 2.65 | 1.20 | - |
| 30 | 1,550 | 1,550 | 1,550 | <1 | 1.73 | 0.98 | 1.90 |
| 31 | 1,700 | 1,700 | 1,700 | 2 | -1.98 | 0.79 | -1.80 |
| 32 | 1,650 | 1,650 | 1,600 | <1 | 0.01 | 0.32 | 0.13 |
| * 33 | 1,600 | 1,600 | 1,650 | 8 | -1.20 | 1.20 | - |
| * 34 | 1,600 | green | 1,650 | 17 | -0.95 | 1.48 | - |

In Table 1 and 2, "Thermal cyclic test (%)" means "dimensional growth in thermal cycling".

The heat curve in a thermal cyclic test in which a sample to be tested is subjected forty times to a heat cycle consisting of a temperature rising from 40°C to 1,260°C in 6 minutes and a cooling from 1,260°C to 40°C in 5 minutes is by way of example as shown in Fig. 1. The size of the sample tested is a 1.27 cm cube. The sizes of the sample are accurately measured using a super micrometer before and after the test.

The thermal expansion hysteresis test was performed over a heat cycle of 40—1260—300°C at a temperature increase rate of 5°C/min and a cooling rate of 5°C/min.

It is known that hysteresis in the thermal expansion indicates the presence of microcracks in the sintered body. Aluminum titanate ceramics also exhibits a large hysteresis loss in thermal expansion owing to the microcracks in the sintered body. The hysteresis loss in thermal expansion which represents the state of the microcracks is closely correlated with the dimensional increase after exposure to the thermal cycling. It has been experimentally confirmed that the relation between them is that, when the difference in thermal expansion between the respective thermal expansion curves during heating and cooling at the same temperature exceeds 0.18%, the dimensional increase in the thermal cycling testing at 40 cycling times exceeds 1%.

In Figs. 2 and 5 are shown states of the glass phase in the mullite base matrices.

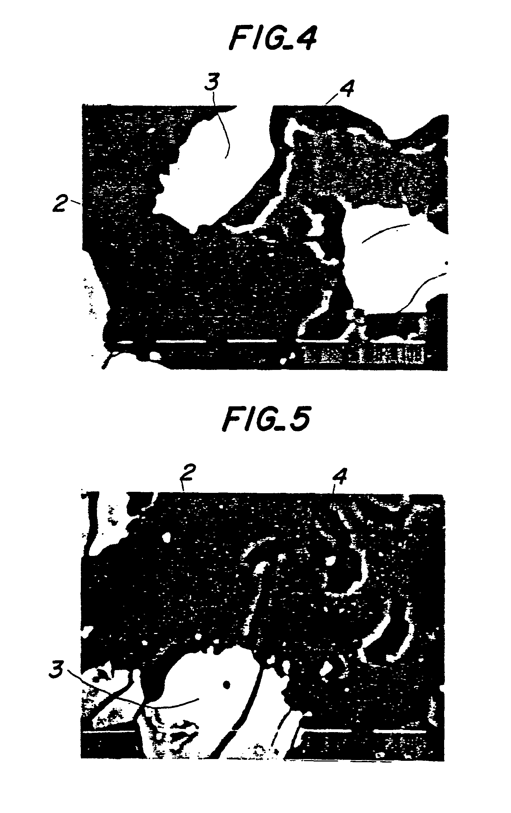

Fig. 2 is a 1,300 magnification SEM photograph of a conventional material as fired in which a glass phase 1, mullite crystals 2, aluminum titanate 3 and pores 4 are seen. Fig. 3 is a 1,300 magnification SEM photograph of this conventional material which has undergone the above-mentioned thermal cycling between 1,260°C and 40°C 250 times. In Fig. 3, no glass phase is observed in the mullite base matrices. Fig. 4 is a 1,300 magnification SEM photograph of a material of Example 3 according to the present invention as fired. No glass phase is observed in the mullite base matrices. Fig. 5 is a 1,300 magnification SEM photograph of the material of Example 3 according to the present invention having undergone the above-mentioned thermal cycling between 1,260°C and 40°C 250 times. In Fig. 5, no change as occurred in the conventional material is observed in the aluminum titanate crystals and the mullite base matrices even after the thermal cycling.

In the measurement of the coefficient of thermal expansion, a test piece having a length of 50 mm was used, which had been taken from an extruded honeycomb structural body having 80 passages per unit area of 1 square cm and a maximum thickness of partition walls of 150 µm.

Ingredients compounded into the aluminum titanate raw materials used in the Examples and Comparative Examples are purified rutile, low soda alumina, usual level soda alumina, iron oxide, and high purity magnesia. Ingredients compounded into the mullite starting materials are high purity koalin, low soda alumina, high purity silica and high purity alumina.

Honeycomb structural bodies as mentioned above were used in evaluations of other characteristics than given above for the Examples and Comparative Examples.

Examples 2 to 4 and Comparative Examples 1 and 5 are samples in which an aluminum titanate starting material was fired at 1,600°C and a mullite starting material was compounded thereinto in green state, while their ratio in weight varied, being 35:65, 40:60, 50:50, 65:35, and 70:30. Among these samples, the coefficient of the thermal expansion is higher in Comparative Example 1. In Comparative Example 5, the amount of glass phase in the mullite base matrices increased to make the dimensional change in the thermal cycling larger. Thus, the performance is deteriorated in both Comparative Examples. Therefore, it is understood that the quantitative relation between aluminum titanate and mullite must be that the aluminum titanate starting material is from 40 to 65% and the mullite raw material is from 35 to 60%.

Next, it is also understood from comparison between Example 6 and Comparative Examples 7 and 8 that the content of ($Na_2O$+$K_2O$) in the aluminum titanate starting material is required to be not more than 0.15%, since when the alkali metal oxide component in the aluminum titanate increases, the glass phase in the mullite base matrices increases to make the dimensional change in the thermal cycling larger. Further from comparison between Example 10 and Example 11, the reason for limiting the content of ($Na_2O$+$K_2O$) is also clear.

The comparison among Examples 9 and 12 and Comparative Example 13 reveals that when the content of MgO exceeds 1.0%, the glass phase in the mullite base matrices increases to make the dimensional change in the thermal cycling larger, and therefore the content of MgO must be not more than 1%.

It is further understood from the comparison among Examples 15 and 16 and Comparative Examples 14 and 17 that when amounts of $Al_2O_3$ and $TiO_2$ in the aluminum titanate are less than 45% and more than 50%, respectively, the dimensional change due to the thermal cycling becomes larger, while when the amount of $Al_2O_3$ exceeds 62.0% and that of $TiO_2$ is less than 34%, the coefficient of thermal expansion becomes higher. In both Comparative Examples the characteristics are poorer.

It is understood from the comparison among Examples 18 and 20 and Comparative Examples 19 and 21 that when the amount of $Fe_2O_3$ exceeds 7.0% or the amount of $SiO_2$ exceeds 1% in aluminum titanate, the dimensional change in the heat cycle becomes larger, leading to worse characteristics.

Next, from the comparison among Examples 24 and 25 and Comparative Examples 23, 26, 27 and 28, it is understood that when the amount of $Al_2O_3$ in the mullite starting material exceeds 82%, the content of corundum crystals entangled in the mullite base matrices becomes larger and the coefficient of thermal expansion becomes higher. However, a few percent of corundum crystals may be present without influencing the coefficient of thermal expansion.

When the amount of $Al_2O_3$ is less than 68%, the content of the glass phase in the mullite base matrices increases to make the dimensional change in the thermal cycling larger. On the other hand, if the amount of $SiO_2$ is less than 18%, the coefficient of thermal expansion becomes larger, while if the amount of $SiO_2$ exceeds 32%, the glass phase in the mullite base matrices increases to make the dimensional change during thermal cycling larger. In addition, if the content of ($Fe_2O_3$+$TiO_2$+CaO+MgO+$Na_2O$+$K_2O$) exceeds 0.8%, particularly if the content of ($Na_2O$+$K_2O$) among them exceeds 0.25%, the glass phase in the mullite base matrices increases to make the dimensional change in thermal cycling larger.

From Table 2, Examples 3 and 22 and Comparative Example 35 in Table 1 and Examples 30, 31 and 32 and Comparative Examples 29, 33 and 34 in Table 2 in which the composition is the same as in Example 3 while the sintering temperature of the aluminum titanate starting material and the mullite starting material is varied can be compared. From this comparison, it is understood that when the firing temperature is less than 1,550°C, the coefficient of thermal expansion increases. If it exceeds 1,700°C, the deformation of the body in firing becomes larger. When the firing temperature of the aluminum titanate starting material or the mullite starting material is higher than that of the green body, the material transfer between aluminum titanate and mullite is restricted to enable the purity of the mullite phase to be maintained. Therefore, it is preferable that the firing temperature of the starting materials is higher than that of the sintered body. When neither the aluminum titanate starting material nor the mullite starting material is fired, as seen in Comparative Example 35, the content of the glass phase in the mullite base matrices increases to make the dimensional change during thermal cycling larger.

As has been detailed above, the aluminum titanate-mullite base ceramics according to the present invention is an excellent ceramics having a melting point of not less than 1,700°C which is similar to that of the conventional ceramic materials, high refractoriness, high thermal shock resistance, and mechanical strength equal to or higher than that of the conventional ceramic materials. When a honeycomb type catalytic converter having numerous fine passages is produced from the ceramics according to the present invention and used in practice, its dimensions do not increase even after much repeated thermal cycling. Further, since the extension of the microcracks is restricted, the ceramics according to the present invention will not be broken under thermal cycling. The ceramics according to the present invention has a more stable crystalline phase and better thermal shock resistance than the conventional ceramics including rare earth additives, even through a test piece is maintained for a long time period at 1,100 to 1,200°C at which temperature aluminum titanate is most likely to be thermally decomposed. Thus, the present invention has overcome the extremely difficult technical problem in obtaining a ceramic material which has fire resistance, heat resistance, thermal shock resistance, and high mechanical strength as well as the thermal shock durability. Moreover, the ceramics according to the present invention can be widely used for automobile ceramic parts such as manifold-mounted honeycomb catalyst carrier, port liner, heat exchanger and kiln furniture which are required to have high thermal shock resistance and thermal shock durability at high temperatures and for other thermally resistive and thermal shock resistive ceramic parts. In addition, it can be widely used as gas turbine parts, solar energy-receiving heat resistive ceramic materials, refractory ceramic materials, such as porcelain in chemical industries, which are required to have heat resistance, thermal shock resistance, thermal shock durability, wear resistance, corrosion resistance, etc.

**Claims**

1. A sintered aluminum titanate-mullite base ceramics having a chemical composition in % by weight, of not more than 0.8% of MgO, from 53 to 74% of $Al_2O_3$, from 14 to 33% of $TiO_2$, from 1.2 to 5% of $Fe_2O_3$, from 6 to 20% of $SiO_2$, and not more than 0.3% of $(CaO+Na_2O+K_2O)$, the amount of glass in mullite base matrices of the sintered article being not more than 5% when measured at a section of the sintered body, said aluminum titanate-mullite base ceramics being obtained by compounding from 40 to 65% of a raw material of aluminum titanate essentially consisting of from 45 to 62% of $Al_2O_3$, from 34 to 50% of $TiO_2$, from 3 to 7% of $Fe_2O_3$, not more than 1% of $SiO_2$ and not more than 0.3% of $(CaO+Na_2O+K_2O)$ with from 35 to 60% of a raw material of mullite essentially consisting of from 18 to 32% of $SiO_2$, from 68 to 82% of $Al_2O_3$, and not more than 0.8% of $(Fe_2O_3+TiO_2+CaO+MgO+Na_2O+K_2O)$, at least one of said aluminum titanate starting material and said mullite starting material being fired, molding the resulting mixture, and firing the thus obtained molding at from 1,500 to 1,700°C in an oxidizing atmosphere.

2. A sintered aluminum titanate-mullite base ceramics having a chemical composition, in % by weight, of not more than 0.8% of MgO, from 53 to 74% of $Al_2O_3$, from 14 to 33% of $TiO_2$, from 1.2 to 5% of $Fe_2O_3$, from 6 to 20% of $SiO_2$, and not more than 0.3% of $(CaO+Na_2O+K_2O)$, the amount of glass in mullite base matrices of the sintered body being not more than 5% when measured at a section of the sintered article, said aluminum titanate-mullite base ceramics being obtained by compounding from 40 to 65% of a raw material of aluminum titanate essentially consisting of not more than 1% of MgO, from 45 to 62% of $Al_2O_3$, from 34 to 50% of $TiO_2$, from 3 to 7% of $Fe_2O_3$, not more than 1% of $SiO_2$ and not more than 0.3% of $(CaO+Na_2O+K_2O)$ with from 35 to 60% of a raw material of mullite essentially consisting of from 18 to 32% of $SiO_2$, from 68 to 82% of $Al_2O_3$, and not more than 0.85% of $(Fe_2O_3+TiO_2+CaO+MgO+Na_2O+K_2O)$, at least one of said aluminum titanate starting material and said mullite starting material being fired, molding the resulting mixture, and firing the thus obtained molding at from 1,550 to 1,700°C in an oxidizing atmosphere.

3. A sintered aluminum titanate-mullite base ceramics according to claim 1 or claim 2, wherein the content of $(Na_2O+K_2O)$ in the aluminum titanate raw material is not more than 0.15%.

4. A sintered aluminum titanate-mullite base ceramics according to any one of claims 1 to 3, wherein the content of $(Na_2O+K_2O)$ in the mullite starting material is not more than 0.25%.

5. A sintered aluminum titanate-mullite base ceramics according to any one of claims 1 to 4, wherein the average coefficient of thermal expansion over the temperature range from 40 to 800°C is in the range of $-2.0\times10^{-6}/°C$ to $2.0\times10^{-6}/°C$.

6. A sintered aluminum titanate-mullite base ceramics according to any one of claims 1 to 5, wherein the increment in a linear dimension of the ceramics is not more than 1.0% after exposure to forty thermal cycles of temperature increase from 40°C to 1,260°C in a time of 6 minutes and cooling from 1,260°C to 40°C in a time of 5 minutes.

7. A sintered aluminum titanate-mullite base ceramics according to any one of claims 1 to 6, wherein the maximum difference between a value on the thermal expansion curve during temperature increase and that on the thermal expansion curve during cooling at the identical temperature is not more than 0.18%.

8. A sintered aluminum titanate-mullite base ceramics according to any one of claims 1 to 7, wherein the ceramics is shaped as a honeycomb structural body.

**Patentansprüche**

1. Sinterkeramik auf Aluminiumtitanat-Mullit-Basis mit der folgenden chemischen Zusammensetzung, in Gew.-%: nicht mehr als 0,8% MgO, 53 bis 74% $Al_2O_3$, 14 bis 33% $TiO_2$, 1,2 bis 5% $Fe_2O_3$, 6 bis 20% $SiO_2$ und nicht mehr als 0,3% $(CaO+Na_2O+K_2O)$, wobei die Menge des Glases in den Mullitbasismatrices des Sinterkörpers nicht mehr als 5%, gemessen im Querschnitt des Sinterkörpers, beträgt, die hergestellt wurde durch Mischen (Compoundieren) von 40 bis 65% eines Aluminiumtitanat-Ausgangsmaterial, im wesentlichen bestehend aus 45 bis 62% $Al_2O_3$, 34 bis 50% $TiO_2$, 3 bis 7% $Fe_2O_3$, nicht mehr als 1% $SiO_2$ und nicht mehr als 0,3% $(CaO+Na_2O+K_2O)$, mit 35 bis 60% eines Mullit-Ausgangsmaterials, im wesentlichen bestehend aus 18 bis 32% $SiO_2$, 68 bis 82% $Al_2O_3$ und nicht mehr als 0,8% $(Fe_2O_3+TiO_2+CaO+MgO+Na_2O+K_2O)$, wobei mindestens eines aus der Gruppe Aluminiumtitanat-Ausgangsmaterial und Mullit-Ausgangsmaterial gebrannt ist, Formen der resultierenden Mischung und Brennen des dabei erhaltenen Formkörpers bei 1 500 bis 1 700°C in einer oxidierenden Atmosphäre.

2. Sinterkeramik auf Aluminiumtitanat-Mullit-Basis mit der folgenden chemischen Zusammensetzung, in Gew.-%: nicht mehr als 0,8% MgO, 53 bis 74% $Al_2O_3$, 14 bis 33% $TiO_2$, 1,2 bis 5% $Fe_2O_3$, 6 bis 20% $SiO_2$ und nicht mehr als 0,3% $(CaO+Na_2O+K_2O)$, wobei die Menge an Glas in den Mullitbasismatrizes des Sinterkörpers, gemessen im Querschnitt des Sinterkörpers, nicht mehr als 5% beträgt, die hergestellt wurde durch Mischen (Compoundieren) von 40 bis 65% eines Aluminiumtitanat-Ausgangsmaterials, im wesentlichen bestehend aus nicht mehr als 1% MgO, 45 bis 62% $Al_2O_3$, 34 bis 50% $TiO_2$, 3 bis 7% $Fe_2O_3$, nicht mehr als 1% $SiO_2$ und nicht mehr als 0,3% ($CaO+Na_2O+K_2O$), mit 35 bis 60% eines Mullit-Ausgangsmaterials, im wesentlichen bestehend aus 18 bis 32% $SiO_2$, 68 bis 82% $Al_2O_3$ und nicht mehr als 0,85% ($Fe_2O_3+TiO_2+CaO+MgO+Na_2O+K_2O$), wobei mindestens eines aus der Gruppe Aluminiumtitanat-Ausgangsmaterial und Mullit-Ausgangsmaterial gebrannt ist, Formen der resultierenden Mischung und Brennen des so erhaltenen Formkörpers bei 1 550 bis 1 700°C in einer oxidierenden Atmosphäre.

3. Sinterkeramik auf Aluminiumtitanat-Mullit-Basis nach Anspruch 1 oder 2, worin der Gehalt an ($Na_2O+K_2O$) in dem Aluminiumtitanat-Ausgangsmaterial nicht mehr als 0,15% beträgt.

4. Sinterkeramik auf Aluminiumtitanat-Mullit-Basis nach einem der Ansprüche 1 bis 3, worin der Gehalt an ($Na_2O+K_2O$) in dem Mullit-Ausgangsmaterial nicht mehr als 0,25% beträgt.

5. Sinterkeramik auf Aluminiumtitanat-Mullit-Basis nach einem der Ansprüche 1 bis 4, worin der durchschnittliche Wärmeausdehnungskoeffizient über den Temperaturbereich von 40 bis 800°C in dem Bereich von $-2{,}0\times10^{-6}$/°C bis $2{,}0\times10^{-6}$/°C liegt.

6. Sinterkeramik auf Aluminiumtitanat-Mullit-Basis nach einem der Ansprüche 1 bis 5, worin die Zunahme der linearen Dimension der Keramik nicht mehr als 1,0% beträgt, nachdem sie 40 thermischen Cyclen einer Temperaturerhöhung von 40°C auf 1 260°C innerhalb eines Zeitraums von 6 Minuten und einer Abkühlung von 1 260°C auf 40°C innerhalb eines Zeitraums von 5 Minuten ausgesetzt worden ist.

7. Sinterkeramik auf Aluminiumtitanat-Mullit-Basis nach einem der Ansprüche 1 bis 6, worin die maximale Differenz zwischen einem Wert auf der Wärmeausdehnungskurve während der Temperaturerhöhung und demjenigen auf der Wärmeausdehnungskurve während der Abkühlung bei der gleichen Temperatur nicht mehr als 0,18% beträgt.

8. Sinterkörper auf Aluminiumtitanat-Mullit-Basis nach einem der Ansprüche 1 bis 7, worin die Keramik zu einem Körper mit Wabenstruktur geformt ist.

**Revendications**

1. Céramique frittée à base de titanate d'aluminium-mullite ayant une composition chimique, en % en poids, de pas plus de 0,8% de MgO, de 53 à 74% de $Al_2O_3$, de 14 à 33% de $TiO_2$, de 1,2 à 5% de $Fe_2O_3$, de 6 à 20% de $SiO_2$, et pas plus de 0,3% de ($CaO+Na_2O+K_2O$), la quantité de verre dans les matrices à base de mullite de l'article fritté ne dépassant pas 5% en mesurant à une section du corps fritté, ladite céramique à base de titanate d'aluminium-mullite étant obtenue en mélangeant 40 à 65% d'une matière première de titanate d'aluminium consistant essentiellement en 45 à 62% de $Al_2O_3$, 34 à 50% de $TiO_2$, 3 à 7% de $Fe_2O_3$, pas plus de 1% de $SiO_2$ et pas plus de 0,3% de ($CaO+Na_2O+K_2O$) avec 35 à 60% d'une matière première de mullite consistant essentiellement en 18 à 32% de $SiO_2$, 68 à 82% de $Al_2O_3$ et pas plus de 0,8% de ($Fe_2O_3+TiO_2+CaO+MgO+Na_2O+K_2O$), au moins l'une de ladite matière première de titanate d'aluminium et de ladite matière première de mullite étant cuite, en moulant le mélange résultant et en cuisant le moulage ainsi obtenu entre 1500 et 1700°C dans une atmosphère oxydante.

2. Céramique frittée à base de titanate d'aluminium-mullite ayant une composition chimique, en % en poids, de pas plus de 0,8% de MgO, de 53 à 74% de $Al_2O_3$, de 14 à 33% de $TiO_2$, de 1,2 à 5% de $Fe_2O_3$, de 6 à 20% de $SiO_2$ et pas plus de 0,3% de ($CaO+Na_2O+K_2O$), la quantité de verre dans les matrices à base de mullite du corps fritté ne dépassant pas 5% en mesurant à une section de l'article fritté, ladite céramique à base de titanate d'aluminium-mullite étant obtenue en mélangeant 40 à 65% d'une matière première de titanate d'aluminium consistant essentiellement en pas plus de 1% de MgO, de 45 à 62% de $Al_2O_3$, de 34 à 50% de $TiO_2$, de 3 à 7% de $Fe_2O_3$, de pas plus de 1% de $SiO_2$ et pas plus de 0,3% de ($CaO+Na_2O+K_2O$) avec de 35 à 60% d'une matière première de mullite consistant essentiellement en 18 à 32% de $SiO_2$, 68 à 82% de $Al_2O_3$ et pas plus de 0,85% de ($Fe_2O_3+TiO_2+CaO+MgO+Na_2O+K_3O$), au moins l'une de ladite matière première de titanate d'aluminium et de ladite matière première de mullite étant cuite, en moulant le mélange résultant et un cuisant le moulage ainsi obtenu entre 1550 et 1700°C dans une atmosphère oxydante.

3. Céramique frittée à base de titanate d'aluminium-mullite selon la revendication 1 ou la revendication 2, où la teneur en ($Na_2O+K_2O$) dans la matière première de titanate d'aluminium ne dépasse pas 0,15%.

4. Céramique frittée à base de titanate d'aluminium-mullite selon l'une quelconque des revendications 1 à 3, où la teneur en ($Na_2O+K_2O$) dans la matière première de mullite ne dépasse pas 0,25%.

5. Céramique frittée à base de titanate d'aluminium-mullite selon l'une quelconque des revendications 1 à 4, où le coefficient moyen de dilatation thermique sur la plage de température de 40 à 800°C est compris entre $-2.0\times10^{-6}$/°C et $2{,}0\times10^{-6}$/°C.

6. Céramique frittée à base de titanate d'aluminium-mullite selon l'une quelconque des revendications 1 à 5, où l'incrément dans une dimension linéaire de la céramique ne dépasse pas 1,0% aprè exposition à 40 cycles thermiques d'une augmentation de température de 40°C à 1260°C en un temps de 6 minutes et à un refroidissement de 1260°C à 40°C en un temps de 5 minutes.

7. Céramique frittée à base de titanate d'aluminium-mullite selon l'une quelconque des revendications 1 à 6, où la différence maximale entre une valeur sur la courbe de dilatation thermique pendant l'augmentation de température et celle sur la courbe de dilatation thermique pendant le refroidissement à la température identique ne dépasse pas 0,18%.

8. Céramique frittée à base de titanate d'aluminium-mullite selon l'une quelconque des revendications 1 à 7, où la céramique est configurée en un corps de structure en nids d'abeilles.

FIG. 1

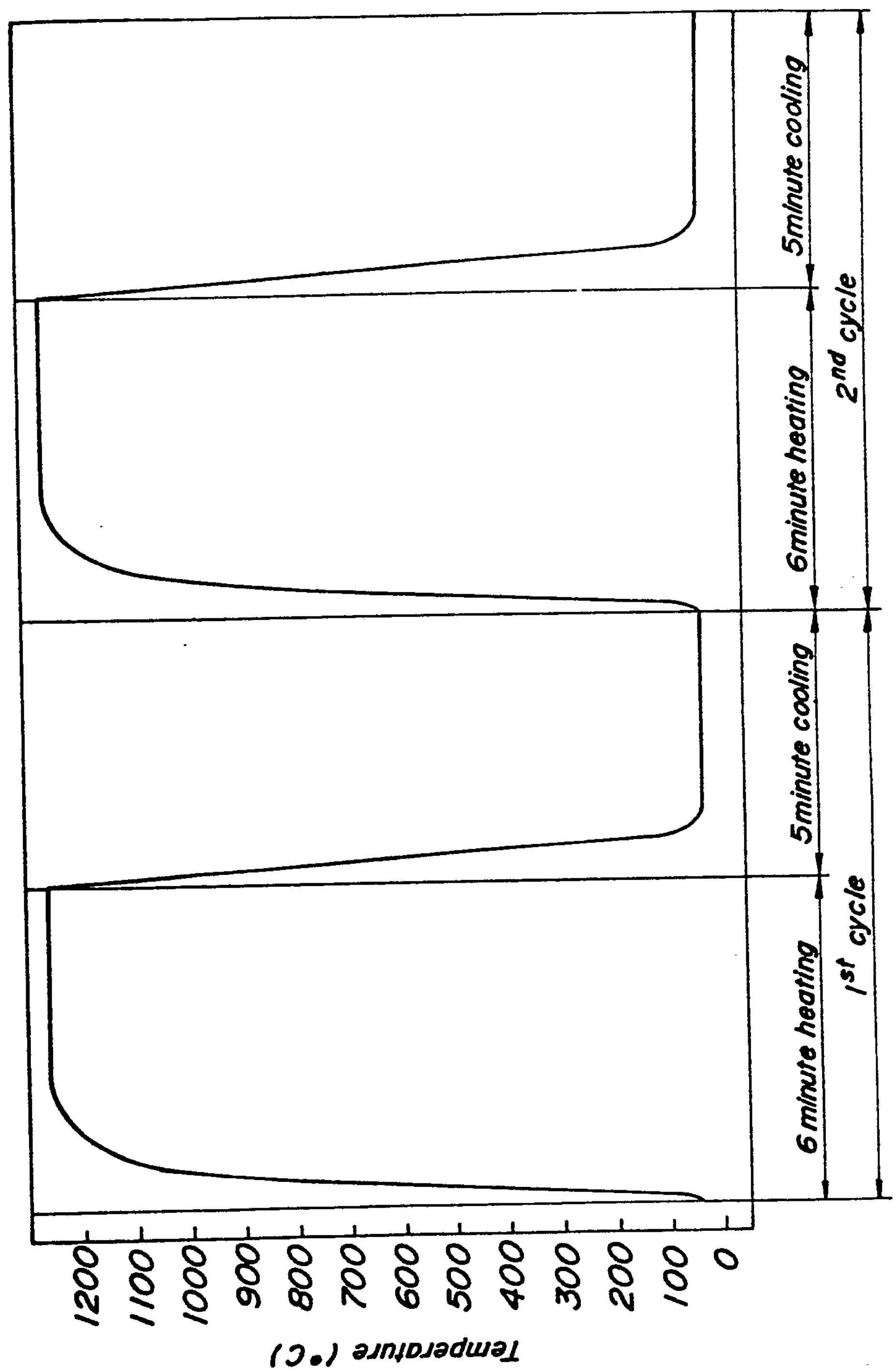
Temperature (°C)
1200
1100
1000
900
800
700
600
500
400
300
200
100
0
6 minute heating
5 minute cooling
6 minute heating
5 minute cooling
1st cycle
2nd cycle

FIG_2

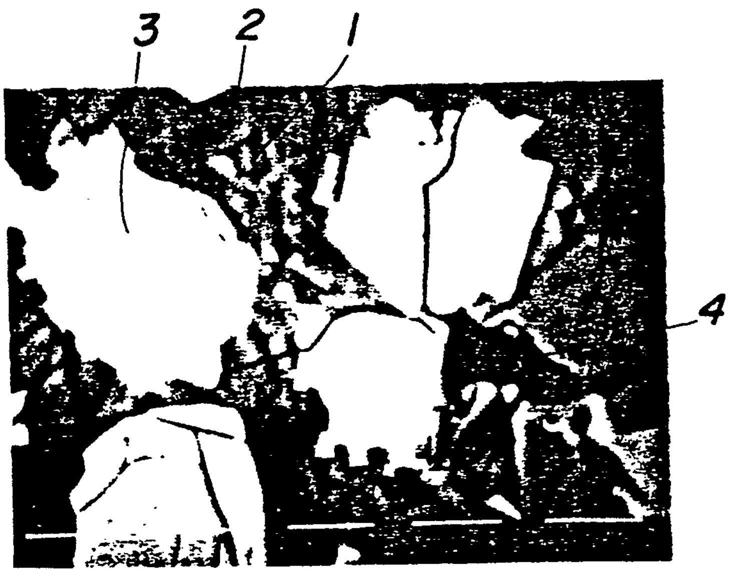


FIG_3

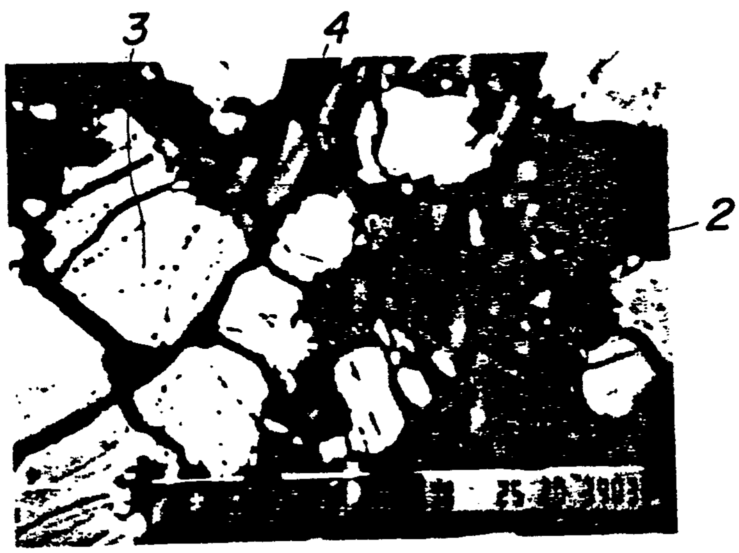

FIG_4

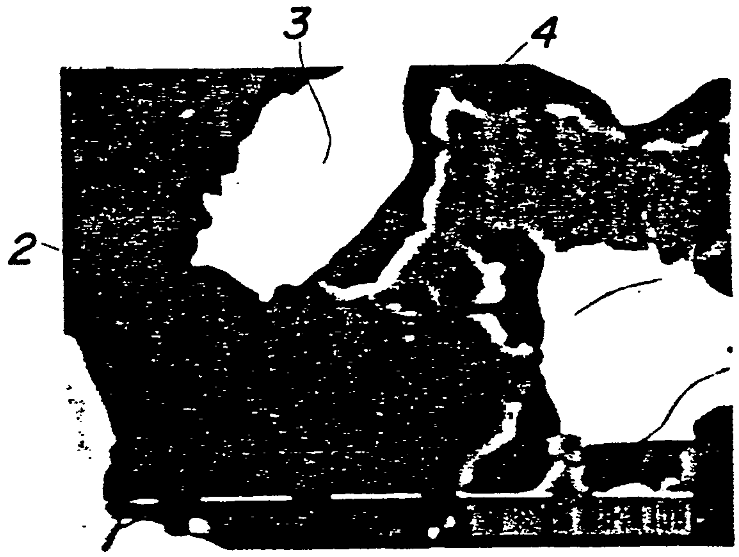


FIG_5